# EUROPEAN PATENT APPLICATION

(11) **EP 1 643 374 A2**
(43) Date of publication of application: **05.04.2006**
(21) Application number: 05006944.2
(22) Date of filing: 30.03.2005
(51) Int. Cl.: G06F 17/24, G06F 17/27

(54) **A data processing system and method for automatic entry of user data**

(30) Priority: 29.09.2004 US 614015 P
(71) Applicant: SAP AG, 69190 Walldorf (DE)
(72) Inventor: Enenkiel, Achim, Dr., 76139 Karlsruhe (DE)
(74) Representative: Richardt, Markus Albert

(57) **Abstract**

The present invention relates to a computer comprising:
- means (52) for storing an embedded mark-up language document (10, 16; 110; 210; 410) carrying user data,
- processor means (44; 125; 225; 425) for execution of an application program (52; 127; 229; 429; 527),
- a graphical user interface (46; 228; 428) for displaying a graphical representation (64) of the embedded mark-up language document and a graphical representation (62) of the application program for a user's selection of the mark-up language document in order to initiate an automatic entry of the user data into the application program.

## Description

### Field of the invention.

The present invention generally relates to the field of data processing, and more particularly to the entry of user data into an application program.

### Background and prior art

In prior art data processing systems electronic data entry forms are often used for manual entry of user data into an application program. Typically such an electronic data entry form has a number of predefined entry fields for entry of user data. For example, such electronic data entry forms can be implemented as hyper text mark-up language (HTML) web pages.

Recently, attention has been drawn to XML as a data expression means for use on the Internet. XML is an extensible meta language, and a user can uniquely define its grammar. In addition, while XML can provide logical meaning for each element, it is much easier to use than HTML (Hypertext Markup Language) for data processing. It is therefore anticipated that XML will become the standard expression method and will be used for the structural languages that will be employed for the exchange of e-commerce documents, for example. Note that the specification for XML is contained in "W3C.Extensible Markup Language (XML) 1.0, 1998, http://www.w3.org/TR/REC-xml".

US Patent Application 20030018466A1 shows a method for XML data encoding and decoding. For transferring XML data via a network the XML data is compressed by encoding and decompressed by the recipient.

US Patent Application 20020073399A1 shows a method for processing extensible mark-up language streams, such as XML streams. The method uses discrete software components mapped to text contained in the extensible mark-up language input stream. The input stream is passed and, as a tag is passed invoking the software component mapped to it.

US Patent Number 6,732,102 shows a method for automated data extraction and reformatting. Various data elements within a website are selected during a design phase. During a playback phase data is extracted from the website based on the matching of the selected data elements.

Another emerging trend in the field of electronic data processing is the use of web services. Web services are an emerging technology that offers the dual promise of simplicity and pervasiveness. Web services represent the next level of function and efficiency in e-business. A Web service can be viewed as any mechanism by which an application or data processing service can be provided to other applications on the Internet.

Web services may be informational or transactional. That is, some services provide information of interest to the requestor while other services may actually lead to the invocation of business procedures. Examples of publicly available Web services today include stock quote services, services to retrieve news from Web news sources, and currency conversion services. For example, U.S. Pat. No. 6,604,135 discloses a method and system for location based web services.

For more detailed information on Web services technology reference is made to
http://www.microsoft.com/germany/ms/msdnbiblio/show_all.asp?siteid=450884
http://www.w3.org/TR/wsdl.html,
http://www.microsoft.com/germany/ms/msdnbiblio/show_all.asp?siteid=600570,http:// n.ethz.ch/student/jodaniel/37-310/slides/UDDI_MarcoCicolini.ppt,
http://n.ethz.ch/student/jodaniel/37-310/slides/UDDI_DominikKaspar.ppt,
http://www.microsoft.com/germany/ms/msdnbiblio/show_all.asp?siteid=600156

One example of Web services are the services responsive to simple object access protocol (SOAP) messages. SOAP is an application invocation protocol that defies a protocol for exchanging information encoded as XML messages. Normally these services are described by WSDL (Web Service Description Language) notation stored in WSDL documents.

A WSDL document can be stored in numerous ways such as in a file, in a DB2 XML registry / repository, or in a DB2 based UDDI registry, for example. UDDI (Universal Description, Discovery, Integration) is a protocol for describing Web services such that interested parties may easily discover them. Specifications for this registry and use of WSDL in the registry are available at http://www.uddi.org/. Service providers may register their services in a UDDI, specifying technical information about how to invoke the service. Often a WSDL document is stored in a UDDI registry in order to define the messages a particular Web services accepts and generates.

The design of UDDI allows enterprises that own Web service enabled applications to publish data about themselves and their services. By providing this information, UDDI implements a simplified form of searching for those interested in locating a particular service in which to fulfil an application process. The conventional UDDI search is focussed on single search criteria such as business name, business location, business categories, business identifier, service type by name, and discovery URL (Uniform Resource Locator).

Various approaches for implementing Web services are known from the prior art, such as from US patent applications 20030093436A1, 20030055868A1, 20030055624A1, 20030018661, 20030110242, 20030163513A1, 20040064503A1, 20040045005A1, 20040003130A1, 20030187841A1.

It is a common disadvantage of prior art web services that they usually require a substantial amount of user interaction. Manual user interaction is tedious and error prone. Another disadvantage of manual interaction is that data which is already available in electronic form needs to be manually re-entered into the Web service. In particular, the level of manual interaction and monitoring required by state of the art Web services is costly in terms of the required human resources.

### Summary of the invention

The present invention provides a computer that has means for storing an embedded mark-up language document carrying user data. The computer has a graphical user interface for displaying a graphical representation of the embedded mark-up language document and for displaying a graphical representation of an application program. By means of the graphical user interface a user can select the embedded mark-up language document in order to initiate an automatic entry of the user data into the application program.

The present invention is particularly advantageous as the embedded mark-up language document can be displayed or printed for review of the user data that is carried by the document. When the user approves the user data contained in the embedded mark-up language document he or she can select the embedded mark-up language document in order to initiate automatic entry of the user data into the application program. This automatic entry procedure uses the mark-up data content of the embedded mark-up language document that is machine readable in order to capture the user data.

For example, the embedded mark-up language document is received on an electronic data carrier, such as on CD-ROM or by downloading it from another computer via the Internet, as an email attachment or by other electronic data transmission channels. The embedded mark-up language document can be rendered on the graphical user interface for a user's review of its content.

After having reviewed the embedded mark-up language document the user can close the document and select the document in order to initiate the automatic entry of the user data into an application program. For example, this can be done by clicking on the icon representing the document with the right mouse button, or by performing a drag-and-drop operation of the icon representing the document onto an icon representing an application program or an electronic data entry form used by the application program.

In accordance with a preferred embodiment of the invention the mark-up language is an extensible mark-up language, such as XML. Preferably the user data is encoded according to an XML schema that is also implemented by the application program for automatically capturing of the user data from the embedded XML document.

In accordance with a further preferred embodiment of the invention the embedded mark-up language document is converted to a mark-up language data package for the automatic entry of the user data into the application program in response to the user's selection of the icon representing the embedded mark-up language document.

In accordance with a further preferred embodiment of the invention the embedded mark-up language document uses the Adobe XML architecture (http://www.adobe.com/enterprise/xml.html)

In another aspect the present invention relates to a data processing system that uses a web service. A first computer is used for the automatic entry of the user data into respective data entry fields of an electronic data entry form of the application program. The user data comprises an identifier of the web service, such as the uniform resource locator (URL) of the web service.

Next, the first computer initiates a data processing step that is to be performed by a second computer on the basis of the data values entered into the electronic data entry form. Alternatively the data processing step is not to be performed by the second computer but by the first computer or another component coupled to the first computer. The initiation and / or performance or completion of the data processing step is signalled to the web service by sending of corresponding signalling data. For example, the signalling data has payment advice data of an electronic payment initiated or performed by the application program. The web service is coupled to a third computer that receives a result of the data processing step from the second computer, e.g. in the form of an XML data stream.

The present invention is particularly advantageous as the third computer can be pre-warned regarding reception of the result, e.g. payment data resulting from the data processing step performed by the first or second computer. For example, the third computer can periodically query the web service for signalling data that has been received by the web service. Alternatively the web service implements a push service for pushing information to the third computer in response to receipt of the signalling data. The signalling data that the third computer receives from the web service can be used in various ways for control of the data processing performed by the third computer.

In accordance with a preferred embodiment of the invention the payment advice data contains the incoming payment details required for assigning and clearing the relevant open item. Typically payment advice data contains the payment amount, payment date, and other information about the payment. The payment advice data has advice data items that contain information on the paid items. They also contain information used for identification purposes such as document number, reference number, billing document number, customer reference number, and so on. The payment advice data can be used during payment clearing to search for and assign open items automatically.

In contrast to the prior art the invention avoids a need for transmission of payment advice notes from a payer to a payee by means of regular mail, e-mail or by fax. These conventional transmission methods have the disadvantage that the data contained on the payment advice notes needs to be manually re-entered into the payee's financial computer system. The present invention is particularly advantageous as such additional error prone and tedious manual interaction can be avoided.

It is also known from the prior art to transmit payment advice notes by means of an electronic message, such as EDIFACT. One of the problems associated with this is that the payer needs to know the exact address of the processing entity of the financial processing system of the payee which is to receive the payment advice note in order to enable automatic processing. The present invention is particularly advantageous as the payer computer system does need to be aware of the exact format used by that processing entity of the payee's financial computer processing system.

In accordance with a preferred embodiment of the invention payment advice data is not only received for incoming payments but also for outgoing payments. When a direct debiting procedure is used, the payment is initiated by the payee computer rather than by the payer computer. In this instance payment advice notes are provided from the payee computer to the payer computer.

The web service can be an integral part of the third computer. In this instance the third computer has a web services interface for receiving signalling data in accordance with the HTTP request-response protocol and an internal interface to a data processing and / or control application for synchronous or asynchronous further processing of the signalling data.

Alternatively the web service is implemented on a separate web-server computer that is loosely or closely coupled to the third computer system. For example, the web service stores the signalling data that is addressed to the third computer in a data file. The resultant data file with the accumulated signalling data is forwarded from the web service to the third computer periodically, when the size of the file has reached a predetermined limit, or at scheduled time intervals.

In another embodiment the web service is implemented as a hub and collects signalling data for a plurality of third computer systems. In this instance it is advantageous to store the signalling data in a database of the web-server using a unique identifier of the third computer to which the signalling data is addressed as a database key. The database is queried periodically for new signalling data that has been received for a given third computer in order to forward the new signalling data to the third computer.

For example, the present invention can be used for industrial control applications. In this instance the first computer is used as a control terminal for entry of control parameters and / or control commands by an operator. The data processing step performed by the second computer is an industrial control function that provides a result which is transmitted from the second computer to the third computer after completion of the control function. The third computer is another component of the industrial control system for performance of another control function. The third computer is pre-warned regarding the execution of the control function of the second computer by means of the signalling data received by the web service that is coupled to it. This information is used in the third computer as a control parameter for execution of the third computer's industrial control functionality.

A preferred field of application of the present invention is financial transactions. For example, a customer receives an invoice from a service provider. The invoice can be received by the customer in paper form or in electronic form, such as in the form of an XML document. The payment data is manually or automatically entered into the customer's computer for initiation of the payment procedure. After completion of the data entry into the online payment transaction form the payment data is transmitted to a second computer for execution of the payment. For example the second computer is a computer of the customer's bank.

The result of the data processing step performed by the bank's computer, i.e. the execution of the payment, is transmitted as corresponding payment data to the third computer, i.e. a computer of the payee. When the payment procedure is initiated the customer's computer and / or the bank's computer sends signalling data comprising payment advice data to the web service that is coupled to the payee's computer. Alternatively the customer mails a paper form for ordering payment from his or her account to his or her bank. In this instance the payment order data is entered into the bank's computer that takes the role of the first computer.

For example, the planned execution date of the payment procedure is communicated to the web service in order to announce the pre-scheduled payment. This has the advantage that the payee's computer can receive an early warning regarding the scheduled payment procedure such that sending of an unnecessary payment reminder can be avoided. Another advantage is that the scheduled payment can be entered into the payee computer's financial planning system.

As a consequence the payee's computer is pre-warned that payment of an open invoice is imminent. This information can be used by the payee's computer to avoid sending unnecessary payment reminders, for the purpose of financial planning and /or other purposes.

Another field of application of the present invention is logistics, in particular supply chain management. For example the customer sends a purchase order to his distributor. The purchase order data is entered into the customers computer and the customers computer initiates processing of the purchase order data by the distributors computer. The customers and / or the distributors computer send signalling data to a web service that is coupled to a manufacturers computer in order to pre-warn the manufacturer regarding the purchase order. This information can be used by the manufacturer for production planning, in particular capacity planning and / or other manufacturing control purposes. After completion of the execution of the purchasing order by the distributor the computer of the manufacturer receives a corresponding confirmation from the distributors computer.

In another application scenario a customer sends an order to a supplier. This can be done in ordinary paper form by mailing the order or by electronically sending an XML-document or another electronic message to the supplier. The supplier completes the order regarding availability, delivery time and order number. Alternatively the supplier forwards the customer's order to a manufacturer which adds these details to the order.

In accordance with a preferred embodiment of the invention, the data values that are entered into the electronic data entry form provided by the first computer are received in electronic form, such as by means of an XML document. Further, the identifier of the web service is also received in electronic form by the first computer. In addition to the identification of the web service the XML document can also comprise the WSDL (web service description language) description of the identified web service.

In accordance with a further preferred embodiment of the invention the signalling data for signalling initiation of the data processing step is directly sent from the first computer to the web service. Alternatively the signalling data is sent from the second computer to the web service.

In accordance with a further preferred embodiment of the invention the signalling data comprises an identifier of the second computer. The signalling data is stored in the database provided by the web service using the identifier of the third computer as a key. The third computer can periodically query the web services database in order to check if signalling data has been received and stored in the database. This can be implemented both as a push or a pull service of the web service.

It is to be noted that a database is not necessary for most applications. Rather, the signalling data is stored in a data file by the Web-Service. The data file with the accumulated signalling data is transmitted e.g. after pre-scheduled time intervals to the third computer.

In accordance with a further preferred embodiment of the invention the signalling data comprises a time stamp that indicates the time when the data processing step has been initiated or performed. The time information can be used as an additional control parameter by the third computer.

In accordance with a further preferred embodiment of the invention a computer network, such as the internet, an intranet or an extranet, provides the communication means for operatively coupling the first, second and third computers as well as the web service to the third computer.

In accordance with a further preferred embodiment of the invention the XML document is received by the first computer from the third computer. The XML document comprises data values and mark-up data being descriptive of the assignment of the data values to respective data entry fields of an electronic data entry form and an identifier of a web service.

For example, XML document is received from a sender computer by the first computer, the XML document containing data values, mark up data being descriptive of the assignment of data values to data entry fields of an electronic data entry form and an identifier of a Web service. The data values are read by the first computer and they are entered into respective data entry fields of an electronic data entry form identified by the mark up data.

In accordance with a further preferred embodiment of the invention a data processing step is initialised on the basis of the data values entered into the electronic data entry form by the first computer and the data processing step is performed using a second computer. The reading of the data values and entering the data values into respective data entry fields of an electronic data entry form is performed as a result of a drag and drop action executed in a Graphical User Interface environment. Then, the result of the data processing step is sent to the third computer by the second computer, and the signalling data is sent by the first computer to the Web service.

In accordance with a further preferred embodiment of the invention XML document includes a control parameter utilized for execution of said data processing step and the identifier of the Web service is an Uniform Resource Locator (URL) wherein each signalling data further comprises at least one of the data values, a time stamp identifying a date and time when at least one of the data values is sent, and an identifier identifying the sender computer.

In accordance with a further preferred embodiment of the invention data processing includes an account payment procedure and the account payment procedure includes a rebate feature.

In accordance with a further preferred embodiment of the invention an invoice is received in an electronic form, such as by means of an XML document. The XML document contains data that specifies one or more payments to be provided from the payer to the payee. In addition the XML document can contain a link to a web service provided by the payee for collection of payment advice data. The payment procedure and the sending of the payment advice data is initiated by the user by performing a drag-and-drop operation on the XML document.

For example, the user selects the XML document and positions the XML document on an icon of the online banking software of his or hers first computer. This invokes the online banking software of the user's first computer. The online banking software automatically reads the data from the XML document that specifies the one or more payments to be provided to the payee as well as the link to the web service.

On this basis the online banking software generates an electronic payment order that is sent to the computer of the payers bank, i.e. the second computer. In addition the online banking software uses at least a sub-set of the data contained in the XML document and / or additional data as payment advice data and sends the payment advice data as signalling data to the Web service as identified by the link.

Alternatively or in addition the online banking software includes the link of the Web service in the payment order that is transmitted to the computer of the payer's bank such that the computer of the payer's bank can send the signalling data with the payment advice data to the web service provided by the payee.

The present invention is particularly advantageous in applications where an early warning of a recipient's computer system regarding execution or scheduled execution of a data processing task to be performed by an external computer system positively impacts the recipient's computer system ability to execute its data processing tasks be it for the purposes of logistics, in particular supply chain management, industrial automation and control, or financial applications to name a few applications. In addition to the positive impact on the recipient's computer system performance the present invention facilitates to avoid unnecessary overheads like sending of unnecessary reminders or other messages from the recipient's computer system to one of the other involved computer systems or involved parties.

In accordance with the preferred embodiment of the invention an user friendly feature of drag and drop function is provided to dynamically capture the data values that become available as a result of the utilization of the Web service by a first computer and thus be able to instantaneously initiate the data processing performed by the second computer. Thus, the human error is also eliminated on the side of the receiving party. In consequence, the present invention provides an improved end-to-end data processing done in a Web service environment that allows for the improved data control and monitoring without the loss of flexibility or speed of processing that is applicable to variety of Web services including an online banking solution.

Next, the first computer initiates a data processing step that is to be performed by a second computer on the basis of the data values entered into the electronic data entry form. Alternatively the data processing step is not to be performed by the second computer but by the first computer or another component coupled to the first computer. The initiation and / or performance or completion of the data processing step is signalled to the web service by sending of corresponding signalling data. The web service is coupled to a third computer that receives a result of the data processing step from the second computer, e.g. in the form of an XML data stream.

The present invention is particularly advantageous as the third computer can be pre-warned regarding reception of the result from the first or second computer. For example, the third computer can periodically query the web service for signalling data that has been received by the web service. Alternatively the web service implements a push service for pushing information to the third computer in response to receipt of the signalling data. The signalling data that the third computer receives from the web service can be used in various ways for control of the data processing performed by the third computer.

The web service can be an integral part of the third computer. In this instance the third computer has a web services interface for receiving signalling data in accordance with the HTTP request-response protocol and an internal interface to a data processing and / or control application for synchronous or asynchronous further processing of the signalling data.

Alternatively the web service is implemented on a separate web-server computer that is loosely or fixedly coupled to the third computer system. For example, the web service stores the signalling data that is addressed to the third computer in a data file. The resultant data file with the accumulated signalling data is forwarded from the web service to the third computer periodically, when the size of the file has reached a predetermined limit, or at scheduled time intervals.

In another embodiment the web service is implemented as a hub and collects signalling data for a plurality of third computer systems. In this instance it is advantageous to store the signalling data in a database of the web-server using a unique identifier of the third computer to which the signalling data is addressed as a database key. The database is queried periodically for new signalling data that has been received for a given third computer in order to forward the new signalling data to the third computer.

For example, the present invention can be used for industrial control applications. In this instance the first computer is used as a control terminal for entry of control parameters and / or control commands by an operator. The data processing step performed by the second computer is an industrial control function that provides a result which is transmitted from the second computer to the third computer after completion of the control function. The third computer is another component of the industrial control system for performance of another control function. The third computer is pre-warned regarding the execution of the control function of the second computer by means of the signalling data received by the web service that is coupled to it. This information is used in the third computer as a control parameter for execution of the third computer's industrial control functionality.

Another field of application of the present invention is financial transactions. For example, a customer receives an invoice from a service provider. The invoice can be received by the customer in paper form or in electronic form, such as in the form of an XML document. The payment data is manually or automatically entered into the customer's computer for initiation of the payment procedure. After completion of the data entry into the online payment transaction form the payment data is transmitted to a second computer for execution of the payment. For example the second computer is a computer of the customer's bank. The result of the data processing step performed by the bank's computer, i.e. the execution of the payment, is transmitted as corresponding payment data to the third computer, i.e. a computer of the payee. When the payment procedure is initiated the customer's computer and / or the bank's computer sends signalling data to the web service that is coupled to the payee's computer. Alternatively the customer mails a paper form for ordering payment from his or her account to his or her bank. In this instance the payment order data is entered into the bank's computer that takes the role of the first computer.

As an alternative to signalling initiation of the payment procedure, the planned execution date of the payment procedure is communicated to the web service in order to announce the pre-scheduled payment. This has the advantage that the payee's computer can receive an early warning regarding the scheduled payment procedure such that sending of an unnecessary payment reminder can be avoided. Another advantage is that the scheduled payment can be entered into the payee computer's financial planning system.

As a consequence the payee's computer is pre-warned that payment of an open invoice is imminent. This information can be used by the payee's computer to avoid sending unnecessary payment reminders, for the purpose of financial planning and /or other purposes.

Another field of application of the present invention is logistics, in particular supply chain management. For example the customer sends a purchase order to his distributor. The purchase order data is entered into the customers computer and the customers computer initiates processing of the purchase order data by the distributors computer. The customers and / or the distributors computer send signalling data to a web service that is coupled to a manufacturers computer in order to pre-warn the manufacturer regarding the purchase order. This information can be used by the manufacturer for production planning, in particular capacity planning and / or other manufacturing control purposes. After completion of the execution of the purchasing order by the distributor the computer of the manufacturer receives a corresponding confirmation from the distributors computer.

In another application scenario a customer sends an order to a supplier. This can be done in ordinary paper form by mailing the order or by electronically sending an XML-document or another electronic message to the supplier. The supplier completes the order regarding availability, delivery time and order number. Alternatively the supplier forwards the customer's order to a manufacturer which adds these details to the order. The commissioned order is sent to the we-service of the customer. This has the advantage that the customer's logistic computer system is pre-warned regarding the scheduled delivery time of the ordered product for optimisation of its supply chain management.

In accordance with a further preferred embodiment of the invention the signalling data for signalling initiation of the data processing step is directly sent from the first computer to the web service. Alternatively the signalling data is sent from the second computer to the web service.

In accordance with a further preferred embodiment of the invention the signalling data comprises an identifier of the second computer. The signalling data is stored in the database provided by the web service using the identifier of the third computer as a key. The third computer can periodically query the web services database in order to check if signalling data has been received and stored in the database. This can be implemented both as a push or a pull service of the web service.

It is to be noted that a database is not necessary for most applications. Rather, the signalling data is stored in a data file by the Web-Service. The data file with the accumulated signalling data is transmitted e.g. after pre-scheduled time intervals to the third computer.

In accordance with a further preferred embodiment of the invention the signalling data comprises a time stamp that indicates the time when the data processing step has been initiated or performed. The time information can be used as an additional control parameter by the third computer.

In accordance with a further preferred embodiment of the invention a computer network, such as the internet, an intranet or an extranet, provides the communication means for operatively coupling the first, second and third computers as well as the web service to the third computer.

In accordance with a further preferred embodiment of the invention the XML document is received by the first computer from the third computer. The XML document comprises data values and mark-up data being descriptive of the assignment of the data values to respective data entry fields of an electronic data entry form and an identifier of a web service.

An XML document is received from a sender computer by a first computer, the XML document containing data values, mark up data being descriptive of the assignment of data values to data entry fields of an electronic data entry form and an identifier of a Web service.

The data values are read by the first computer and they are entered into respective data entry fields of an electronic data entry form identified by the mark up data.

In accordance with a further preferred embodiment of the invention a data processing step is initialised on the basis of the data values entered into the electronic data entry form by the first computer, performance of the data processing step using a second computer. The reading of the data values and entering the data values into respective data entry fields of an electronic data entry form is performed as a result of a drag and drop action executed in a Graphical User Interface environment. Then, the result of the data processing step is sent to the sender computer by the second computer, and signalling data for signalling initiation of the data processing step is sent by the first computer to the Web service.

In accordance with a further preferred embodiment of the invention XML document includes a control parameter utilized for execution of said data processing step and the identifier of the Web service is an Uniform Resource Locator (URL) wherein each signalling data further comprises at least one of the data values, a time stamp identifying a date and time when at least one of the data values is sent, and an identifier identifying the sender computer.

In accordance with a further preferred embodiment of the invention data processing includes an account payment procedure and the account payment procedure includes a rebate feature.

The present invention is particularly advantageous in applications where an early warning of a recipient's computer system regarding execution or scheduled execution of a data processing task to be performed by an external computer system positively impacts the recipient's computer system ability to execute its data processing tasks be it for the purposes of logistics, in particular supply chain management, industrial automation and control, or financial applications to name a few applications. In addition to the positive impact on the recipient's computer system performance the present invention facilitates to avoid unnecessary overheads like sending of unnecessary reminders or other messages from the recipient's computer system to one of the other involved computer systems or involved parties.

In accordance with the preferred embodiment of the invention an user friendly feature of drag and drop function is provided to dynamically capture the data values that become available as a result of the utilization of the Web service by a first computer and thus be able to instantaneously initiate the data processing performed by the second computer. Thus, the human error is also eliminated on the side of the receiving party. In consequence, the present invention provides an improved end-to-end data processing done in a Web service environment that allows for the improved data control and monitoring without the loss of flexibility or speed of processing that is applicable to variety of Web services including an online banking solution.

### Brief description of the drawings

In the following preferred embodiments of the invention will be described in greater detail by way of example only making reference to drawings in which:
- Figure 1: illustrates the structure of an embedded mark-up language document,
- Figure 2: illustrates the structure of the embedded mark-up language document after its conversion to a mark-up language data package,
- Figure 3: shows a block diagram of an embodiment of a computer of the invention,
- Figure 4: illustrates data processing system for processing data values received from a sender computer in the Web-based service environment of the present invention,
- Figure 5: illustrates a more detailed system for processing data values received from a sender computer in the Web-based service environment of the present invention,
- Figure 6: is a flowchart of a process describing a method of the present invention,
- Figure 7: illustrates an alternative embodiment of the financial system for processing account information obtained from a sender computer in the Web-based service environment of the present invention,
- Figure 8: illustrates a block diagram of a further preferred embodiment of a data processing system of the invention.

### Detailed description

The claimed invention is applicable to many different industries. One skilled in the art will appreciate that the various embodiments and concepts of the present invention are applicable to plurality of industries without straying from the spirit of the present invention.

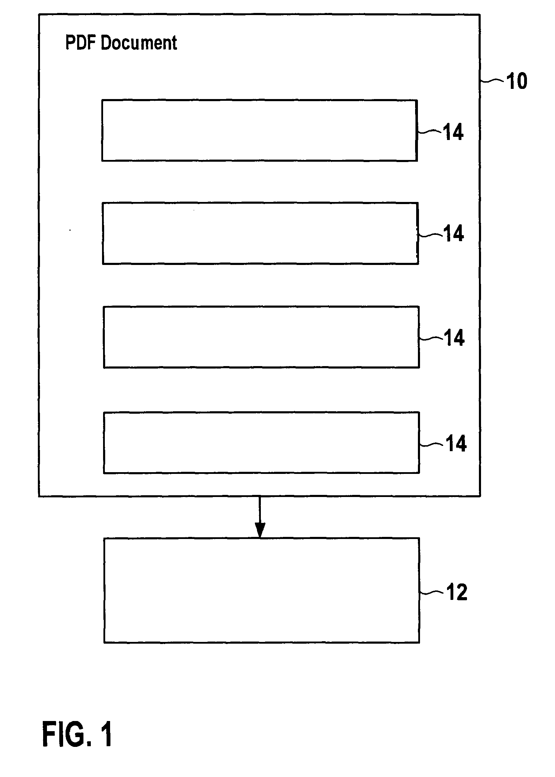

Figure 1 shows embedded mark-up language document 10. Embedded mark-up language document 10 can be rendered for entering of user data, for review of previously entered user data and/or for printing.

In the preferred embodiment considered here embedded mark-up language document 10 is an embedded XML document that has embedded XML data 12.

In the example considered here embedded mark-up language document 10 is an electronic data entry form that has data entry fields 14 for user data. Preferably each data entry field 14 has an associated explanatory text that explains the user data to which the respective data entry field relates. Usually at least some of the data entry fields 14 are compulsory data entry fields; some of the data entry fields 14 may be optional and can be left open at the user's option.

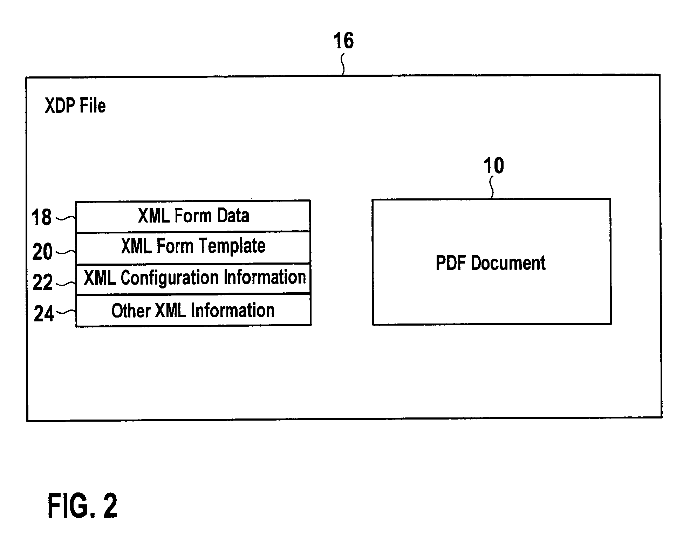

Figure 2 shows the structure of embedded mark-up language document 10 after its conversion to an XML data package (XDP) file 16. The XDP file 16 contains the data entry fields 14, the textual information and the graphics, if any, of the embedded mark-up language document 10 in encoded form.

In addition XDP file 16 has XML form data 18. The XML form data 18 carries the user data that has been entered into the data entry fields 14. The user data is encoded in the XML form data 18 according to an arbitrary XML schema chosen by the developer of the embedded mark-up language document 10 during the design phase. The schema can be an industry-standard, an enterprise standard, or completely customised. Some examples of industry-standard schemas are ACORD (insurance), XBRL (finance), HL7 (healthcare), and SF424 (eGovernment).

XML form template 20 of XDP file 16 contains the mapping of the XML form data 18 to the data entry fields 14 as well as the logic that controls the interactive behaviour of the embedded mark-up language document 10, such as calculations and data validations.

XML configuration information 22 of XDP file 16 is a global reference for database and web services SOAP connections. XML configuration information 22 is used by the XML form template 20 as such a global reference.

Further, XDP file 16 can contain other XML information 24. Such other XML information 24 can include customer XML information such as a schema file to facilitate validation, XML digital signatures, content meta data to facilitate archiving, or data used by a custom digital document application.

The XDP file 16 is an XML file, so all XML tools, XML system interfaces, and web services can work directly with it. Also the XML data is directly accessible by such tools and interfaces. Further, the embedded mark-up language document 10, e.g. PDF document, can provide all the traditional PDF benefits of precision document layout and high fidelity printing by embedding the PDF in an XML element, i.e. XDP file 16.

Preferably the PDF representation of embedded mark-up language document 10 is chosen when file size and transmission time are important and when the document is packaged with supplementary data or images. The XDP representation is chosen when the document and user data must travel in XML work flows, the user data needs to be manipulated with XML tools, or when it needs to be stored in an XML repository.

Preferably, the Adobe XML architecture is used for the embedded mark-up language document 10, XDP file 16 and for the conversion between these two representations. Usage of the Adobe XML architecture is advantageous as it uses an object-oriented approach to map user XML form data and data from dynamic sources to particular data entry fields in the form layout.

The Adobe XML architecture specification, October 2003, Adobe Systems Incorporated, is herein incorporated by reference. However, it is to be noted that the present invention is not restricted to the Adobe XML architecture but that it can be used for other mark-up languages and respective embedded mark-up language documents as well, in particular for extensible mark-up languages.

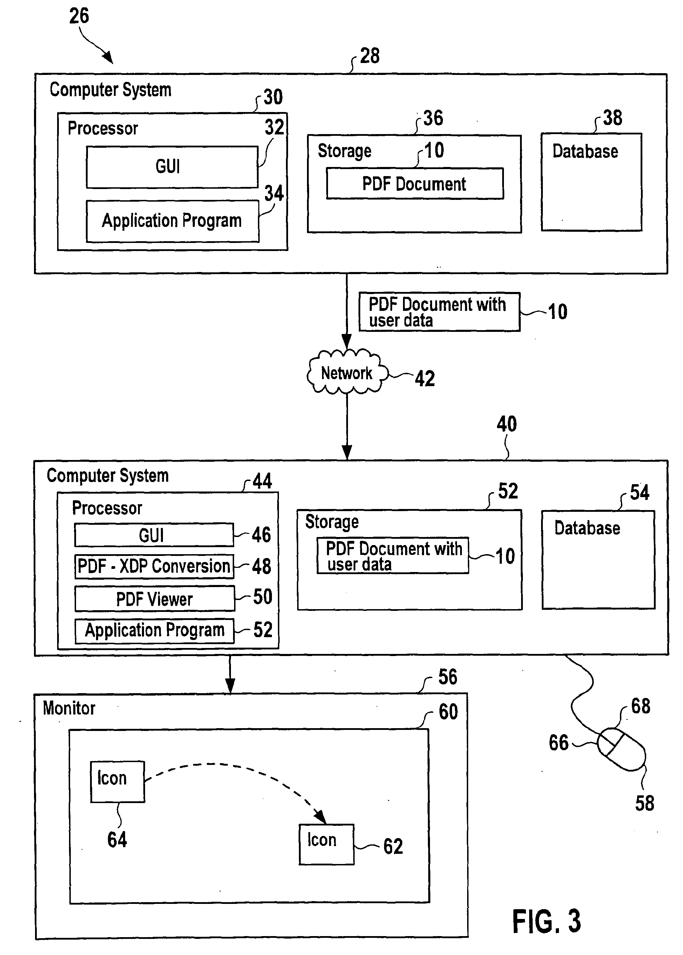

Figure 3 shows a block diagram of a data processing system 26. Data processing system 26 has computer system 28. Computer system 28 has processor 30 for execution of a program module that provides a graphical user interface 32 and for execution of an application program 34.

Computer system 28 has storage 36 for storage of the embedded mark-up language document 10 (cf. figures 1 and 2) in the form of a PDF representation or as an XDP file 16 (cf. figure 2). Further, computer system 28 has database 38.

Computer system 28 is coupled to computer system 40 by means of network 42, such as by the Internet, an intranet or extranet.

Computer system 40 has processor 44, a program module for providing the graphical user interface 46, program module 48 for PDF to XDP conversion, PDF viewer program 50, and application program 52. For example, Adobe Acrobat Reader can be used as PDF viewer program 50.

Further, computer system 40 has storage 52 for storage of the embedded mark-up language document 10 that carries the user data and database 54.

The monitor 56 is coupled to the computer system 40 as well as a computer mouse 58. Monitor 56 displays a window 60 that is generated by the graphical user interface 46. Window 60 shows icon 62 that represents application program 52.

In operation user data is entered into embedded mark-up language document 10 by means of computer system 28. This can be done manually by a user or automatically by invoking application program 34 that reads user data from database 38 and fills in the user data into the embedded mark-up language document 10.

The embedded mark-up language document 10 with the user data is transmitted via network 42 from computer system 28 to computer system 40 and stored in storage 52 of computer system 40. This can be done by downloading or uploading the embedded mark-up language document 10, by sending an email carrying embedded mark-up language document 10 as an email attachment, or using other data exchange means.

The user of computer system 40 can review the content of the embedded mark-up language document 10 including its user data, by invoking PDF viewer program 50 that renders the embedded mark-up language document 10 on monitor 56 or for printing the embedded mark-up language document 10.

After receipt of the embedded mark-up language document 10 by computer system 40 and storing it in its storage 52, graphical user interface 46 generates icon 64 that represents the embedded mark-up language document 10. Rendering of the embedded mark-up language document 10 by means of the PDF viewer program 50 can be initiated by the user by double clicking icon 64 with the left mouse button 66 of computer mouse 58.

When the user approves the user data that is carried by the embedded mark-up language document 10 he or she can close the document and select the document for automatic entry of the user data into the application program 52. This can be done by selecting icon 64 with the left mouse button 66 and moving icon 64 onto icon 62 by means of a so-called drag-and-drop operation. 'Dropping' icon 64 onto icon 62 invokes program module 48 that performs the PDF-XDP conversion.

For example, the icon 64 is shown in the file browser, such as Microsoft Explorer, of the computer system 40 for selection by the user. Preferably, the icon 64 is selected from the file browser window by clicking on it and moved onto the icon 62 that represents the application program 52 where it is "dropped", i.e. by means of a so-called "drag-and-drop" operation. Dropping of the icon 64 causes automatic entry of the user data carried by the mark-up language document 10 into the application program 52.

As a further alternative the application program 52 has a "load document" action bar. When the user clicks on the "load document" action bar a file tree is shown from which the user select one or more mark-up language documents for entry into the application program.

In the example considered here the PDF document is transformed into the XDP file 16 (cf. figure 2) that is an XML file. The application program 52 captures the user data contained in the XDP file 16 for the purpose of performing or initiating a data processing step. For example, the application program 52 stores the user data in database 54.

As an alternative to a drag-and-drop operation the automatic entry of the user data into the application program 52 can also be initiated by clicking on the right mouse button 68 or by another suitable user input operation using the graphical user interface 46. Further, it is also possible that the user selects a group of documents for automatic entry of the respective user data.

A preferred application of the embodiment of the invention considered here is home banking and/or Internet banking. In this instance the mark-up language document 10 is an electronic invoice. In addition to the payment amount and an identification of the payee and the payee's bank account details, invoice number etc. the mark-up language document 10 may contain additional control information such as a fixed point of time when the payment is to be performed and/or a rebate in percentage of the payment amount to be deducted from the payment amount if certain conditions are met, e.g. payment provided within a certain deadline.

Application program 52 can be a home-banking program. When the mark-up language document 10 is entered into the application program 52 (such as by drag-and-drop or otherwise as explained above) the application program 52 automatically generates a corresponding payment order that is transmitted to a banking computer using any home-banking standard, such as HBCl. This can be done collectively for a plurality of electronic invoices in order to initiate a collective or block bank transfer.

Alternatively the user uploads the mark-up language document 10, i.e. the electronic invoice, to an Internet-banking web site. Uploading the mark-up language document 10 causes an application program running on an Internet-banking server computer to generate a corresponding payment order.

In both cases additional security and/or authentication features can be provided. For example, the home banking or Internet banking software checks the validity of the user's electronic signature before the payment order is generated.

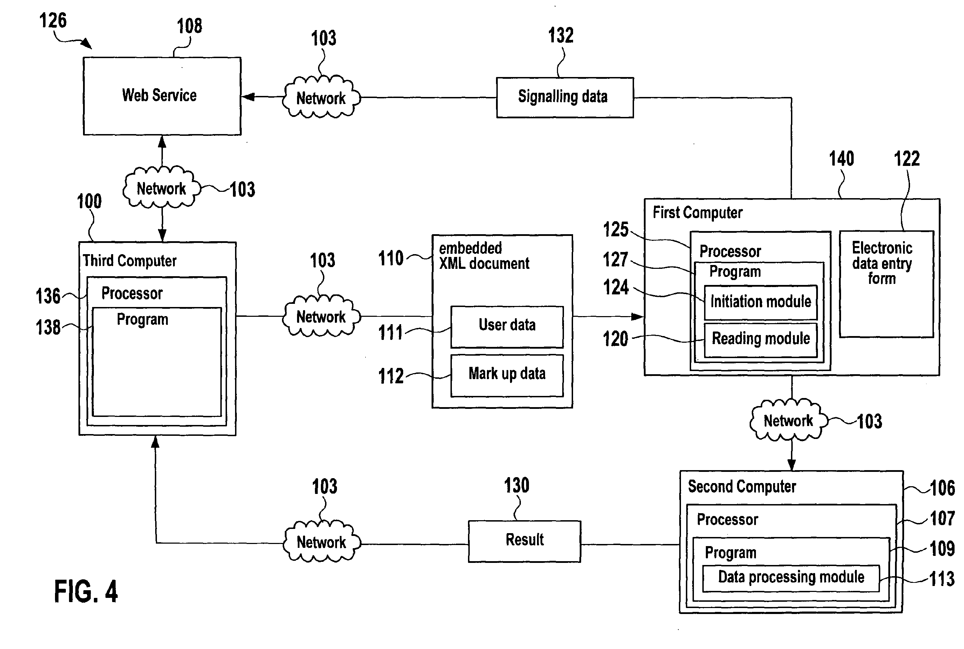

Figure 4 illustrates another embodiment of a data processing system. The data processing system 126 of figure 4 has a first computer 140 that has a similar design as computer system 40 in the embodiment of figure 3. The first computer 140 can receive the embedded mark-up language document 110 that corresponds to the embedded mark-up language document 10 of figures 1 to 3. In the preferred embodiment considered here embedded mark-up language document 110 is an embedded XML document that implements the Adobe XML architecture. The embedded XML document 110 carries user data 111 and mark-up data 112.

The first computer 140 is coupled through a network 103 with a second computer 106, a third computer 100 and web services 108. In the embodiment considered here the embedded XML document 110 is sent from the third computer 100 that has a processor 136 and a program 138 to the first computer 140.

The first computer 140 has a processor 125 and a program 127 which further comprises a reading module 120, and an initiation module 124. The reading module 120 serves to capture the user data 111 included in the XML document 110 and to enter these data values into respective data entry fields of an electronic data entry form 122 identified by the mark up data 112. The initiation module 124 serves to invoke the second computer 106 in order to begin a data processing step.

The XML document 110 comprises a set of user data 111 and mark-up data 112 being descriptive of the assignment of user data values to data entry fields of an electronic data entry form.

The second computer 106 has a processor 107 and a program 109. The program 107 has a data processing module 113 responsible for processing of the user data 111. When the second computer completes the data processing step, it sends the result 130 of the data processing step to the third computer 100 over the network 103. Also, a signalling data 132 is sent by the first computer 140 to the Web service 108.

Alternatively the data processing step is not performed by the second computer but by the first computer.

In operation, the XML document 110 is received by the first computer 140 from the third computer 100. The processor 125 executes a program 127 which in turn starts the reading of the user data 111 contained in the XML document 110. Then, the user values are entered automatically into respective data entry fields of an electronic data entry form 122 identified by the mark up data 112.

The capture of the user data values into the data fields of the electronic data form is accomplished be the utilization of reading module 120 allowing automatic capture of data values into the plurality of fields of an electronic data entry form 122.

Next, a program 127 having an initiation module 124 starts the data processing step by invoking the second computer 106. The second computer's processor 107 executes a program 109 having a data processing module 113 which on the basis of the data values entered into the electronic data entry form by the first computer performs the data processing step ending in a result 130 being sent to the third computer 100 over the network 103.

Simultaneously, the first computer 140 sends the signalling data 132 to the Web service 108, where the signalling data is stored in the database of the Web service 108. The signalling data is then further utilised for the controlling of the processing of the result 130 by the third computer 100 where the processor 136 executes the program 138 in order to determine when the result 130 is arriving from the second computer 106.

It is to be noted that the signalling data 132 can also be transmitted from the second computer 106 to web service 108 via network 103 for signalling initiation or completion of the data processing step performed by data processing module 113. Further, it is to be noted that XML document 110 can be provided by a forth computer that is not shown in figure 1, e.g. computer system 28 of figure 3. In other words, the source of the XML document 110 and the receiver of result 130 do not need to be identical. In fact the third and forth computers can belong to different organisational entities.

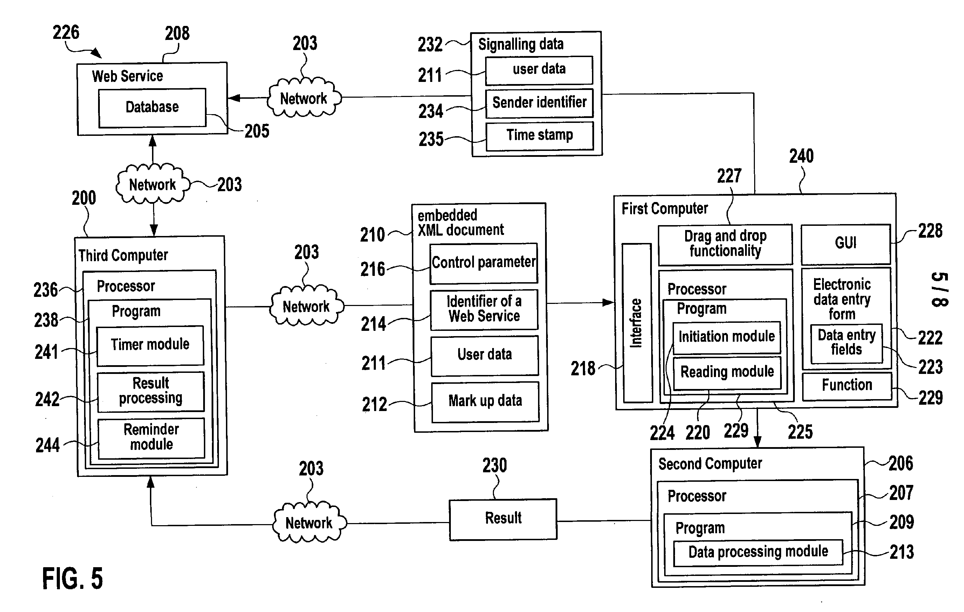

Figure 5 illustrates a more detailed system for processing of the data values received from a sender computer in the Web-based service environment of the present invention. The embodiment of Figure 5 constitutes a logical continuation of the Figure 4 where like elements are referenced by like reference numbers.

A third computer 200 having a processor 236, a program 238, and a plurality of modules 240 to 244 is disclosed. The third computer 200 transmits an embedded XML document 210 to a first computer 240. The embedded XML document comprises a control parameter 216, an identifier of the web service (URL) 214, other user data 211, and mark up data 212.

The first computer 240 has a processor 225 and the program modules 229, 220 and 224. The program module 229 has a reading module 220 that captures the user data values 211, 214, 216 and allows them to be entered automatically into respective data entry fields including the compulsory fields of an electronic data entry form 222. The initiation module 224 serves to execute a data processing step on the basis of the user data values 211 entered into the electronic data entry form 222 by the first computer 240. The initiation module 224 invokes a second computer 206 to start the data processing step.

The first computer 240 further comprises an interface 218 that is designed to recognise the format of the XML document 210. Program module 229 executes a function 229 that allows automatic filling out of the electronic data entry form 222 on the basis of the XML document's format. The automatic filling out of the form performed when the user uses the drag and drop functionality 227 available in the graphical user interface environment 228.

The second computer 206 has a processor which serves to execute program modules 209 and 211. Program module 209 has a data processing module 213 that is responsible for the processing of the data values. The result of the data processing step is sent to a third computer 200 utilising a network 203. In the next step, the first computer 240 sends signalling data 232 to the web service 208 over the network 203.

The signalling data 232 comprises at least one of the user data values 211, a time stamp 235, identifying a date and a time when at least one of the data values is sent, as well as sender identifier 234. The Web service 208 comprises a database 205 for storage of signalling data 232.

In operation, utilising a network 203, a third computer 200 sends the XML document 210 to the first computer 240. The XML document 210 comprising a plurality of user data values 211, and a control parameter 216 utilised for execution of the data processing step, as well as identifier of a Web Service (URL) 214 and the mark up data 212 being descriptive of the assignment of data values to the data entry fields of an electronic data entry form is received by the first computer 240. The control parameter 216 offers a rule that is executed by the first's computer program 229 in order to determine the amount of the result 230. The data values are captured into the respective data entry fields 223 of an electronic data entry form 222 utilizing a reading module 220.

Then, the initiation module 224 invokes the second computer 206 and thus begins the data processing step, whereby the user is able to control when the data values of the XML document are entered into the electronic data entry form by using drag and drop functionality 227. It happens in such a way that in the graphical user interface 228 he moves an icon of an XML document into the software containing the program 229 and thus the initiation module 224 is activated.

The processor 207 of the second computer 206 completes processing of data utilising a data processing module 213. The result is sent to the third computer 200 utilising the network 203. Simultaneously, the first computer sends the signalling data 232 to the Web service 208, where the signalling data containing user data values 211, the sender identifier 234, and the time stamp 235 is stored in the database 205 of the web service 208. Also, the control parameter 216 is communicated to the Web Service by the signalling data 232.

The signalling data 232 stored in the database 205 of the web service is utilised for the controlling of the processing of the result 230. When the reminder module 244 determines that the result is overdue and that the reminder should be initiated it consults the signalling data 232 in order to find out if the result processing was initiated. If the result processing module 242 determines that signalling data contains the information that the data processing step was initiated, the reminder module invokes a timer module 241 which is set for the predetermined amount of time to allow for the processing. However, if the predetermined amount of time expires and the result 230 still does not arrive, in this case the reminder module 244 initiates sending a reminder.

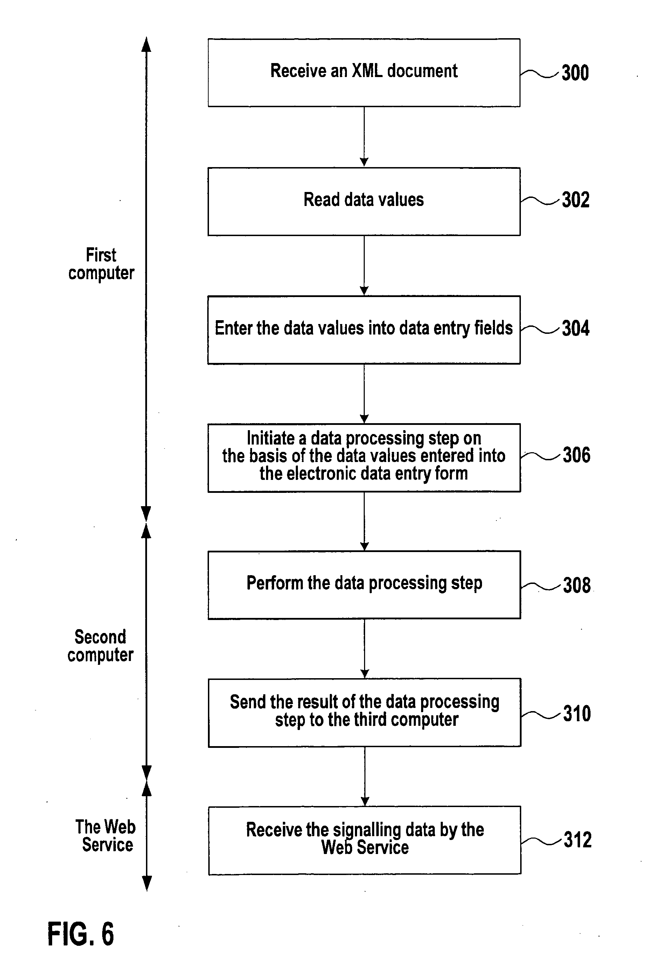

Figure 6 shows a corresponding flow chart. In step 300 an embedded XML document is received from a sender computer by a first computer, the XML document containing data values, and mark up data being descriptive of the assignment of data values to data entry fields of an electronic data entry form and an identifier of a Web service. In the next step 302, the data values contained in the XML document are read by the reading module. In step 304 the data values are entered into respective data entry fields of an electronic data entry form identified by the mark up data by the first computer. In Step 306, a data processing step is initiated on the basis of the data values entered into the electronic data entry form by the first computer. In step 308, the data processing step is performed using a second computer.

Then, in the step 310, the result of the data processing step is sent to the sender computer by the second computer. In the last step 312, a signalling data is sent for signalling initiation of the data processing step by the first computer to the Web Service.

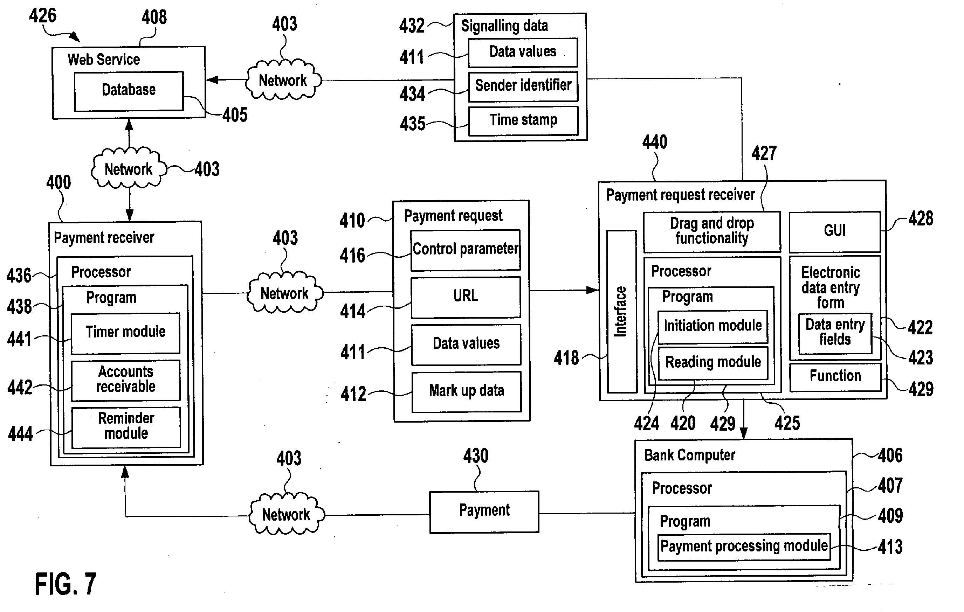

Figure 7 illustrates and alternative embodiment of the data processing system of the present invention describing a case when data processing system of the present invention is used as a financial / banking online system. Elements of figure 7 that correspond to elements of figures 4 and 5 are designated by like reference numerals.

Payment receiver 400 has a processor 436, a program 438 which comprises timer module 441, accounts receivable 442, and reminder module 444. Processor 436 serves to execute program modules 440, 442 and 444. Program module 438 has an account receivable module 442 for processing of payment 430. The payment receiver 400 sends payment request 410 utilising a network 403 to a payment request receiver 440. The payment request 410 comprises control parameter 416, an Uniform Resource Locator (URL) 414, data values 411, and mark up data 412. The mark up data 412 is being descriptive of the assignment of data values to their data entry fields of an electronic data entry form.

According with the preferred embodiment a first computer is in this case a payment request receiver 440 comprising an interface 418, a processor 425, a program 429, an initiation module 424, and a reading module 420. The payment request receiver 440 further comprises an electronic data entry form 422 with the plurality of data entry fields 423, a graphical user interface 428, a drag and drop functionality 427, and a function 429.

An interface 418 recognises the format of the payment request 410. The format contains such payment information as credit organisation, bank connection and the amount of the total payment. he processor 425 serves to execute the program modules 424 and 420. The initiation module 424 initiates a data processing step on the basis of the data values entered into the electronic data entry form 422 by the first computer, in this case a payment request receiver 440. The performance of the data processing step takes place using a second computer, in this preferred embodiment the second computer being a bank computer 406.

Program module 429 has a reading module 420 which serves to capture the data values and enter them into respective data entry fields of an electronic data entry form 422. The electronic data entry form has a plurality of data entry fields 423. Program module 429 serves also to execute the function 429 which allows, on the base of format, to automatically fill out an electronic data entry form 422.
The reading of data values 411 and entering the data values into respective data entry fields 423 of an electronic data entry form 422 is performed in a response to drag and drop functionality 427 used in a graphical user interface environment 428.

Bank computer 406 has a processor 407 which serves to execute program modules 409 and 413. Program module 409 has a payment processing module 413 which performs an operation resulting in sending the payment 430 to the payment receiver 400. The payment request receiver 440 or the bank computer 406 sends the signalling data 432 to the Web service 408 utilising a network 403. Each signalling data 432 comprises e.g. at least one of the data values 411, a time stamp 435 identifying a date and/or a time when at least one of the data values is sent, and an identifier 434 identifying the payment receiver 400. Signalling data 432 is stored in a database 405 of a web service 408 in order to be used for controlling of the processing of a payment 430.

In operation, payment receiver 400 sends payment request 410 to the payment request receiver 440 utilizing the network 403. When the payment request receiver 440 receives a payment request 410 comprising an URL; a control parameter 416, utilised for execution of payment processing step; and a mark up data 412 being descriptive of the assignment of data values to data entry fields 423, the reading of the data values 411 and entering of the data values 411 into respective data entry fields 423 takes place. The control parameter 416 provides a rule that is executed by the payment request receiver 440 in order to determine the payment amount. For example the rule allows a discount of 3 percent if the payment is performed within a week.

Next, the payment processing step is initiated on the basis of the data values entered with the help of initiation module 424 which invokes the bank computer 406 to start payment processing. The automatic filling out of electronic data entry form 422 takes place when the user using graphical user interface 428 drags and drops the icon of payment request 410 into the online banking software. The program 429 executes then the function 429 which allows on the base of the format of the payment request 410 to automatically fill out the electronic data entry form 422.

Subsequently, the processor 407 of the bank computer 406 executes the program 409 which has a payment processing module 413 that completes the payment processing step and sends the payment 430 to the payment receiver 400 utilising the network 403.

In the next step, the payment request receiver 440 sends signalling data comprising at least one of the data values 411, a time stamp 435 identifying a date and the time when at least one of the data values is sent to the database 405 of a web service 408 and a sender identifier 434. The signalling data communicates also the control parameter 416 with the respective rules containing information about the rebate amount to the Web Service. Subsequently, the signalling data 432 is stored in a database 405, in order to be used for controlling of the processing of a payment by accounts receivable 442.

Alternatively to sending the signalling data after completion of the payment processing step, the signalling data is already sent when the order for performance of the payment processing step is generated or sent to the bank computer 406 by request receiver 440 or when the order is received by bank computer 406. In this instance it is preferred that the signalling data includes the date of the planned payment.

When the reminder module 444 determines that the payment 430 is overdue, instead of sending the reminder right away it attempts to find out if payment was initiated on the basis of the signalling data 432. If accounts receivable module 442 determines that the signalling data contains the information that the payment 430 was initiated, the reminder module invokes a timer module 441 which is set for the predetermined amount of time to allow for the processing. However, if the predetermined amount of time expires and the payment still does not arrive, in this case the reminder module 444 initiates sending a reminder.

Utilizing the signalling data 432 which communicates also the control parameter 416 with the rules governing the payment amount allows the incorporation of a rebate feature in the account payment procedure allowing different amount of a discount, for example 3%, 5% or 10% based on the amount of time that passes until the actual payment 430 is received.

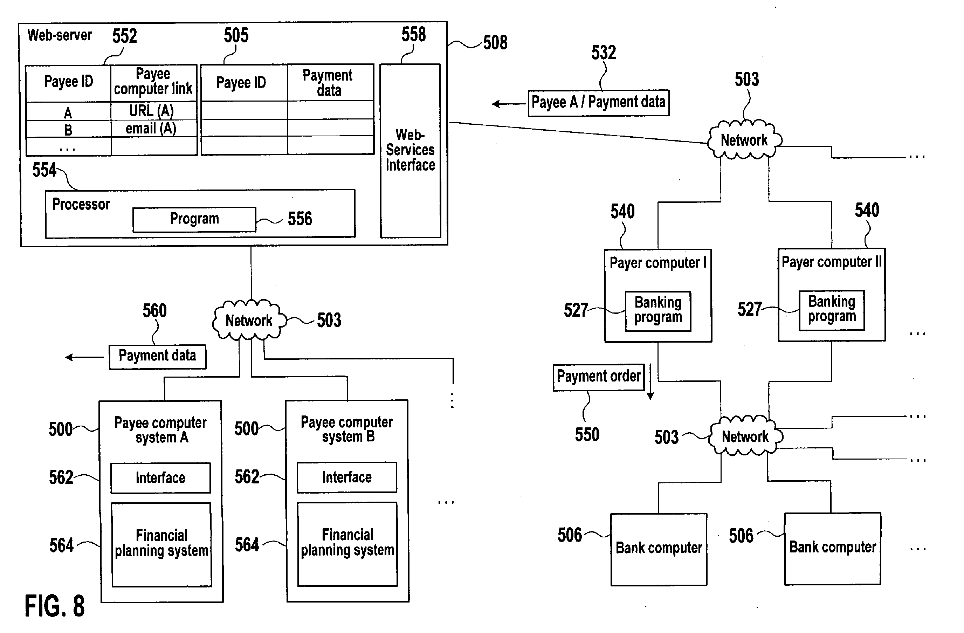

Figure 8 shows a block diagram of an alternative embodiment. Elements in the embodiment of figure 8 corresponding to elements of 4, 5 or 7 are designated by like reference numerals. The embodiment of figure 5 includes a plurality of first computers 540 that belong to respective payers I, II, ... Each one of the first computers 540 has a banking program 527 for entering a payment order 550. Likewise a plurality of bank computers 506 are coupled to the plurality of first computers 540 via internet 503.

The first computers 540 of the payers and / or the bank computers 506 can send signalling data 532 to web-server 508 via internet 503. The signalling data 532 includes at least an identifier of the payee that is to receive the payment and payment data, such as the amount of the payment and a pre-scheduled date when the payment procedure is to be executed and/or payment is expected to be received by the payee.

Web-server 508 has storage 505 for storage of the signalling data it has received for the various payees that are registered in table 552. Table 552 has an entry for each registered payee comprising the payee's identifier and address information regarding the payees computer, such as the payee's computer URL, email address or other link information for sending electronic data.

Web-server 508 has processor 554 for execution of computer program 556. Web services interface 558 of web-server 508 serves for communication in accordance with the HTTP request-response protocol via internet 503, in particular for receiving the signalling information 532.

A plurality of third computers 500 belonging to respective payees A, B... are coupled to web-server 508 via internet 503. Each of the third computers 500 has a web-interface 562 and a financial planning system 564.

In operation one of the payers enters a payment order into its computer system. Without restriction of generality payer I is considered in the following. In response to the payer's I entry of the payment data into banking program 527 payment order 550 is transmitted via internet 503 to payer's I bank's computer, i.e. one of the computers 506.

In addition, signalling data 532 is sent from payer's computer 540 to web-server 508 via internet 503. Alternatively the bank computer 506 sends signalling data 532 after receipt of payment order 550. Signalling data 532 is received by web services interface 558 of web-server 508 and is entered into storage 505. Consecutively web-server 508 may receive a sequence of additional signalling data 532 from various computers 540 of other payers or from various other bank computers 506. The respective signalling data is collected in storage 505 of web-server 508 using the respective payee identifiers as a key.

The accumulated signalling data that is stored in storage 505 is transmitted to the respective payee computer systems 500 at periodic time intervals, each time new signalling data comes in, when the accumulated signalling data has reached a given size, at prescheduled points of time or using other trigger criteria.

For example program 556 processes each entry of table 552 by reading the respective accumulated payment data from storage 505 and sending the payment data as payment data 560 to the link given in table 552 for the respective payee via internet 503 to the respective payee's computer system 500. In the example considered here the payment data 560 of signalling data 532 is read from storage 505 and sent to the URL of payee computer system A 500 where it is received by interface 562. Payment data 560 is entered into financial planning system 564.

### List of Reference Numerals

- 10: Embedded mark-up language document
- 12: Embedded XML data
- 14: Data entry field
- 16: XDP File
- 18: XML form data
- 20: XML form template
- 22: XML configuration informations
- 24: Other XML information
- 26: Data processing system
- 28: Computer system
- 30: Processor
- 32: Graphical user interface
- 34: Application program
- 36: Storage
- 38: Database
- 40: Computer system
- 42: Network
- 44: Processor
- 46: Graphical user interface
- 48: Program Module
- 50: PDF Viewer program
- 52: Application program
- 54: Database
- 56: Monitor
- 58: Computer mouse
- 60: Window
- 62: Icon
- 64: Icon
- 66: Mouse Button
- 68: Mouse Button
- 100: Third computer
- 103: network
- 106: Second computer
- 108: Web Service
- 110: Embedded XML document
- 111: User data
- 112: Mark up data
- 113: Data Processing Module
- 120: Reading module
- 124: Initiation module
- 125: processor
- 126: Data processing system
- 127: program
- 130: result
- 132: Signalling data
- 136: processor
- 138: program
- 140: First computer
- 200: Third computer
- 202: XML document
- 203: network
- 206: Second computer
- 207: processor
- 208: Web Service
- 209: program
- 210: Embedded XML Document
- 211: User Data
- 212: Mark up data
- 213: Data processing module
- 214: Identifier of a Web Service
- 216: Control parameter
- 218: interface
- 220: Reading module
- 222: Electronic data entry form
- 224: Initiation module
- 225: processor
- 226: Data processing system
- 227: Drag and drop functionality
- 229: program
- 228: Graphical User Interface
- 230: result
- 232: Signalling data
- 234: Sender identifier
- 235: Time stamp
- 236: processor
- 238: program
- 240: First computer
- 241: Timer module
- 242: Result processing
- 244: Reminder module
- 400: Payment Receiver
- 410: Payment request
- 403: network
- 405: database
- 406: Bank computer
- 407: processor
- 408: Web Service
- 409: program
- 410: Payment Request
- 411: Data values
- 412: Mark up data
- 413: Payment processing module
- 414: Uniform Resource Locator (URL)
- 416: control parameter
- 418: interface
- 420: Reading module
- 422: Electronic data entry form
- 424: Initiation module
- 425: processor
- 426: Data processing system
- 427: Drag and drop functionality
- 429: program
- 428: Graphical User Interface
- 430: result
- 432: Signalling data
- 434: Sender identifier
- 435: Time stamp
- 436: processor
- 438: program
- 440: Payment request receiver
- 441: Timer module
- 442: Accounts receivable
- 444: Reminder module
- 500: Payee computer system
- 503: Internet
- 506: Bank computer
- 508: Web-server
- 527: Banking program
- 540: Payer computer
- 532: Signalling data
- 550: Payment order
- 552: Table
- 554: Processor
- 556: Computer program
- 558: Web services interface
- 560: Payment data
- 562: Interface
- 564: Financial planning system.

## Claims

1. A computer comprising:
- means (52) for storing an embedded mark-up language document (10, 16; 110; 210; 410) carrying user data,
- processor means (44; 125; 225; 425) for execution of an application program (52; 127; 229; 429; 527),
- a graphical user interface (46; 228; 428) for displaying a graphical representation (64) of the embedded mark-up language document and a graphical representation (62) of the application program for a user's selection of the mark-up language document in order to initiate an automatic entry of the user data into the application program.

2. The computer of claim 1, the user data being encoded according to a mark-up language schema, the application program implementing the mark-up language schema for the automatic entry of the user data.

3. The computer of claim 1 or 2, further comprising means (48) for converting the embedded mark-up language document to a mark-up language data package for the automatic entry into the application program.

4. The computer of claim 3, the means for converting being adapted to perform the conversion of the embedded mark-up language document to the mark-up language data package in response to the user's selection.

5. The computer of any one of the preceding claims, the graphical user interface being adapted for entry of the user's selection by means of a drag-and-drop operation.

6. A data processing system comprising:
- a first computer (40; 140; 240; 440) in accordance with any one of the preceding claims for entering the user data into respective data entry fields of an electronic data entry form (122; 222; 422), the user data comprising an identifier of a web service (108; 208; 408), the first computer comprising means (124;224; 424) for initiation of a data processing step to be performed on the basis of the data values entered into the electronic data entry form,
- a second computer (106; 206; 406) for performing the data processing step and sending a result of the data processing step to a third computer (100; 200; 400),
- a web service (108; 208; 408) being coupled to the third computer, the web service being adapted to receive signalling data (132; 232; 432; 532) that signals scheduling, initiation and/or completion of the data processing step.

7. The data processing system of claim 6, the first computer being adapted to send the signalling data to the web service.

8. The data processing system of claim 6 or 7, the second computer being adapted to send the signalling data to the web service.

9. The data processing system of any one of claims 6, 7 or 8, the signalling data comprising at least one of the data values that has been entered into the electronic data entry form, a time stamp identifying a date and/or time when the data processing step has been scheduled, initiated and/or performed, and an identifier for identification of the third computer.

10. The data processing system of any one of claims 6 to 9, the web service comprising a database for storing the signalling data using the identifiers of the third computers as keys.

11. The data processing system of any one of the preceding claims 6 to 10, the web service implementing a push or a pull service for the third computer.

12. A data processing method comprising:
- storing an embedded mark-up language document carrying user data,
- displaying a graphical representation of the embedded mark-up language document and a graphical representation of an application program for a users selection of the embedded mark-up language document in order to initiate an automatic entry of the user data into the application program.

13. The data processing method of claim 12, the user data being encoded according to a mark-up language schema, the application program implementing the mark-up language schema for the automatic entry of the user data.

14. The data processing method of claim 12 or 13, further comprising converting the embedded mark-up language document to a mark-up language data package for the automatic entry of the user data into the application program.

15. The data processing method of claim 14, wherein the conversion of the embedded mark-up language document to the mark-up language data package is performed in response to the users selection.

16. The data processing method of any one of the preceding claims 12 to 15, the users selection being performed by means of a drag-and-drop operation.

17. The data processing method of any one of the preceding claims 12 to 16, the mark-up language being XML.

18. The data processing method of any one of the preceding claims 12 to 17, wherein the application program is executed by a first computer (40; 140; 240; 440), and further comprising,
- entering the user data into respective data entry fields of an electronic data entry form of the first computer, the user data comprising an identifier of a web service,
- initiating a data processing step by the application program on the basis of the user data entered into the electronic data entry form,
- sending signalling data for signalling scheduling, initiation, performance and/or completion of the data processing step to a web service,
- sending a result of the data processing step to a third computer, the third computer being coupled to the web service.

19. The method of claim 18, further comprising providing the signalling data from the web service to the third computer prior to receipt of the result by the third computer.

20. The data processing method of claim 18, whereby the mark-up language document is received from the third computer.

21. The data processing method of any one of the preceding claims 18, 19 or 20 whereby the signalling data is sent from the first computer to the web service.

22. The data processing method of any one of the preceding claims 18 to 21, whereby the data processing step is to be performed by a second computer (106), and whereby the signalling data is sent from the first and/or the second computer to the web service.

23. The data processing method of any one of the preceding claims 18 to 22, the mark-up language document containing a control parameter (216) for processing at least one of the data values by the first computer prior to entry into the electronic data entry form.

24. The data processing method of any one of the preceding claims 18 to 23, the data processing step comprising an account payment procedure.

25. The data processing methods of claim 7 or 8, the control parameter specifying a price rebate.

26. The data processing method of any one of the preceding claims 18 to 25, wherein the identifier of the web service is a uniform resource locator (URL).

27. The data processing method of any one of the preceding claims 18 to 26, wherein the signalling data comprises at least one of the user data that has been entered into the electronic data entry form, a time stamp identifying a date and time when the data processing step has been scheduled, initiated and/or performed, and an identifier for identification of the third computer.

28. The data processing method of claim 27, the third computer using its identifier for querying the web service.

29. A computer program product comprising computer executable instructions for performing the data processing method of any one of the preceding claims 12 to 28.

30. An Internet banking server computer system comprising:
- means for receiving an embedded mark-up language document (10, 16; 110; 210; 410) carrying payment data,
- processor means for execution of an application program,
- wherein the application program generates a payment order when the mark-up language document is received from a client computer.

31. The Internet banking server computer of claim 30, wherein the payment data is uploaded from the client computer.
